# EUROPEAN PATENT APPLICATION

(11) **EP 3 059 947 A1**
(43) Date of publication of application: **24.08.2016**
(21) Application number: 16161101.7
(22) Date of filing: 30.09.2010
(51) Int. Cl.: H04N 7/18, H04N 5/44, H04H 40/00

(54) **RECEIVER AND DISTRIBUTION UNIT FOR VEHICLE ENTERTAINMENT SYSTEM**

(30) Priority: 30.09.2009 US 570517
(62) Divisional of application: 10821270.5
(71) Applicant: Audiovox Corporation, Hauppauge, NY 11788 (US)
(72) Inventor: SHALAM, David, M., Syosset, NY 11791 (US); TRANCHINA, James, R, Dix Hills, NY 11746 (US)
(74) Representative: Isarpatent

(57) **Abstract**

A receiver and distribution unit in a vehicle that includes a wireless receiver and signal processing/conversion facilities. The receiver and distribution unit may include a data bus and a selection multiplexer connected to the wireless receiver and an additional media source. The wireless receiver receives asignal comprising media content from a wireless network, such as the FLOTM network. The processing/conversion facilities decode the signal for output to a display and speaker in the vehicle. The selection multiplexer multiplexes media content from the wireless receiver or media content from the additional media source to the data bus. A function control, controllable by a wired controller and a wireless controller, controls the functions of the receiver and distribution unit.

## Description

### CROSS-REFERENCE TO RELATED PATENT APPLICATION

This application is a Continuation-in-Part Application of U.S. Application Serial No. 11/619,240, filed on January 3, 2007, which claims the benefit of Provisional Application Serial No. 60/756,070, filed on January 4, 2006, the contents of which are herein incorporated by reference in their entirety.

### BACKGROUND OF THE INVENTION

### 1. Technical Field

The present disclosure relates to a receiver and distribution unit for a vehicle entertainment system.

### 2. Discussion of the Related Art

As society becomes more mobile and therefore spends a greater amount of time traveling and away from home, demand rises for electronic devices outside the home environment. For example, media units including video screens have been mounted in the headrests of vehicles, facilitating video entertainment on the road. These media units can play video and audio from different media sources located in different portions of the vehicle.

Conventional vehicle entertainment systems play the CDs, DVDs, and VHS tapes brought into the vehicle by passengers. However, such systems are limited in their ability to provide a dynamic selection of media choices. Various media, including television, radio and media on the Internet, are available via wireless communications, such as cellular phone networks to cellular phones and personal digital assistants (PDAs). Such media may also be transmitted via other wireless networks over different radio frequencies, including frequencies in the ultra high frequency (UHF) range.

Therefore, a need exists for a receiver and distribution unit for a vehicle entertainment system which can wirelessly receive media and distribute that media to users of the vehicle.

### SUMMARY OF THE INVENTION

A receiver and distribution unit for a vehicle, according to an exemplary embodiment of the present invention, comprises a wireless receiver receiving a signal comprising media content from a wireless network, and signal processing/conversion facilities for decoding the signal into audio signals for output to a speaker and video signals for output to a display.

The receiver and distribution unit may further include a data bus and a selection multiplexer. The selection multiplexer, which is connected to the wireless receiver and an additional media source, multiplexes one of media content corresponding to the wireless receiver or media content corresponding to the additional media source to the data bus.

The receiver and distribution unit may further include a function control for controlling functions of the unit. The function control may be controllable by a wired controller and a wireless remote controller.

A wireless media system for a vehicle, according to an exemplary embodiment of the present invention, comprises a wireless receiver receiving a signal comprising media content from a wireless network, a speaker, a display, and signal processing/conversion facilities for decoding the signal into audio and video signals to output to the speaker and display.

The wireless media system may further include a data bus and a selection multiplexer. The selection multiplexer, which is connected to the wireless receiver and an additional media source, multiplexes one of media content corresponding to the wireless receiver or media content corresponding to the additional media source to the data bus.

A receiver and distribution unit for a vehicle, according to an exemplary embodiment of the present invention, comprises a receiver unit and a docking station. The receiver unit comprises a wireless receiver for receiving a signal comprising media content from a wireless network, and signal processing/conversion facilities for decoding the signal into audio signals and video signals. The docking station distributes the audio signals to a speaker and the video signals to a display. The docking station is mounted in the vehicle and the receiver unit is removably connected to the docking station.

The receiver unit of the receiver and distribution unit may further include a data bus and a selection multiplexer. The selection multiplexer, which is connected to the wireless receiver and an additional media source, multiplexes one of media content corresponding to the wireless receiver or media content corresponding to the additional media source to the data bus.

### BRIEF DESCRIPTION OF THE DRAWINGS

The above and other features of the present invention will become more readily apparent by describing in detail exemplary embodiments thereof with reference to the accompanying drawings, in which:
FIG. 1 is a block diagram showing a receiver and distribution unit, according to an embodiment of the present invention;
FIG. 2 is a schematic diagram showing connections to the receiver and distribution unit in a vehicle, according to an embodiment of the present invention; and
FIGs. 3a, 3b, and 3c illustrate a receiver and distribution unit, according to an exemplary embodiment of the present invention.

### DETAILED DESCRIPTION OF EXEMPLARY EMBODIMENTS

Exemplary embodiments of the present invention now will be described more fully hereinafter with reference to the accompanying drawings. This invention, may however, be embodied in many different forms and should not be construed as limited to the embodiments set forth herein.

Embodiments of the invention relate to a receiver and distribution unit for a vehicle entertainment system. For example, the entertainment system includes the receiver and distribution unit and at least one display screen mounted in a vehicle, such as an automobile, minivan or sport utility vehicle (SUV). The display screen is electrically connected to the receiver and distribution unit for receipt of multimedia content, such as, for example, video, audio and text.

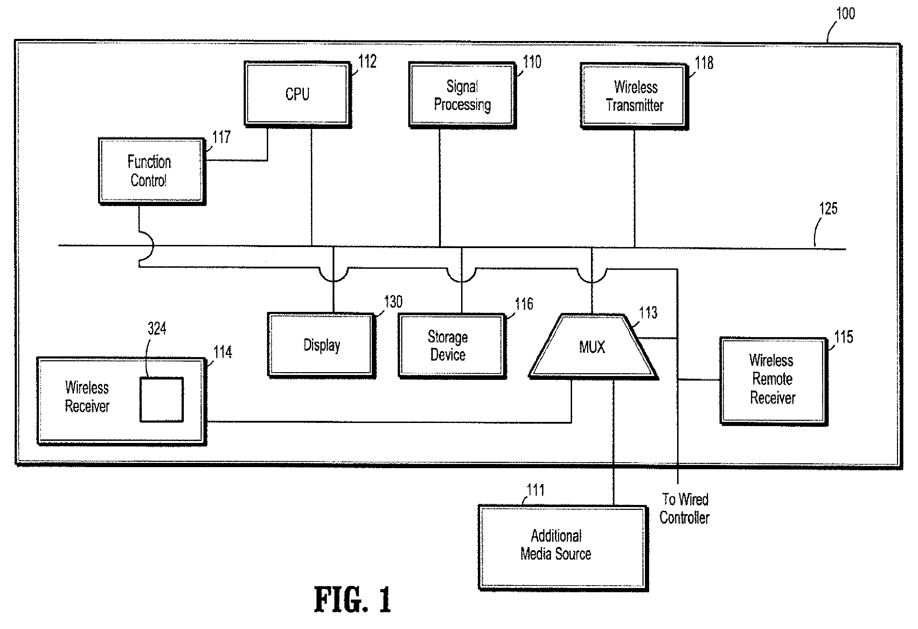

FIG. 1 is a block diagram showing a receiver and distribution unit, according to an embodiment of the present invention; and

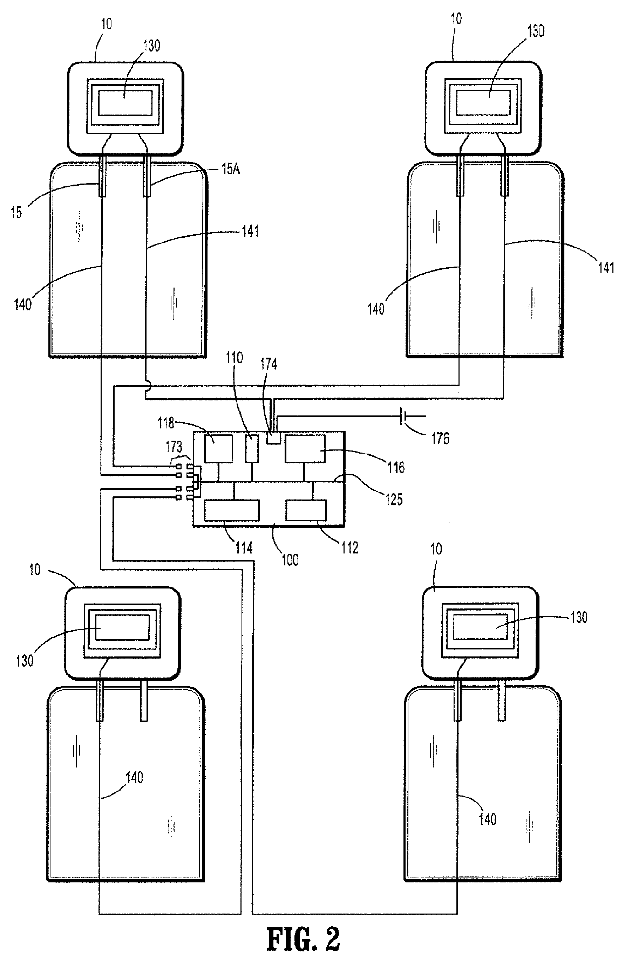

FIG. 2 is a schematic diagram showing connections to the receiver and distribution unit in a vehicle, according to an embodiment of the present invention.

Referring to FIG. 1, the receiver and distribution unit 100 includes a wireless receiver 114, which receives multimedia data, such as, for example, video, audio, metadata, and text in, for example, JPEG or MPEG formats. Formatting may include compression of the data using, for example, JPEG, MPEG, MPEG-2, MPEG-4, H.264 and AAC+ procedures. Wireless capability may be provided by, for example, a wireless card, which fits into a standard PCMCIA (Personal Computer Memory Card International Association) slot.

The data may be transmitted by any known wireless network, such as satellite or a cellular network, and is preferably transmitted via a wireless network capable of transmitting large volumes of high quality multimedia data to a large number of users, such as, for example, the FLO™ (forward link only) network provided by QUALCOMM^{®}, Inc. For example, the receiver and distribution unit 100 is similar in function to a cellular mobile device that is capable of receiving and storing multimedia content, such as, for example, a cellular telephone or personal digital assistant (PDA). In an embodiment, the receiver and distribution unit 100 receives multimedia content, including, for example, video programs, via a wireless network. A user of the receiver and distribution unit 100 may be a subscriber to such a system and receive multimedia data in accordance with the terms of the user's subscription.

In different embodiments, a receiver and distribution unit 100 can receive and store data transmitted via various spread spectrum modulation techniques, including, but not limited to, frequency hopping and direct sequence modulation. The varying frequencies utilized by spread spectrum communication techniques result in a high bandwidth for transmitting data to the receiver and distribution unit 100.

The receiver and distribution unit 100 may receive signals transmitted over any frequency in the radio spectrum. In an embodiment of the present invention, the receiver and distribution unit 100 receives signals transmitted via a dedicated spectrum utilizing high power transmission (e.g., 50 kW ERP). For instance, the receiver and distribution unit 100 may receive signals transmitted via frequencies in the upper UHF frequency bands, for example, frequencies ranging from 300 MHz to 3 GHz. Upper UHF frequency bands include various channels that the receiver and distribution unit 100 can receive signals from, including, but not limited to, the frequency band previously allocated to UHF TV channel 55 in the United States (716 MHz - 722 MHz).

In an embodiment of the present invention, signals received by the receiver and distribution unit 100 are modulated using orthogonal frequency division multiplexing (OFDM). OFDM is a form of multi-carrier modulation wherein different data streams are modulated onto multiple, parallel sub-carriers on various frequencies within a signal. To obtain a high bandwidth, the sub-carriers are spaced closely together and are orthogonal to one another, resulting in no overlapping or interfering between the sub-carriers. Guard intervals may further be implemented to prevent interference. Upon receiving the OFDM signals, signal processing/conversion facilities 110 located at the receiver and distribution unit 100 demodulate the signals. Guard intervals, if present, are identified, and the multiple data streams of the sub-carriers are demultiplexed. The signal processing/conversion facilities 110 decompress and decode the signals, and the receiver and distribution unit 100 distributes the data to the display device 130 and/or other devices (e.g., speakers). Selected sub-carriers may be demodulated individually, mitigating the effects of interference present with respect to one sub-carrier when demodulating other sub-carriers. Sub-carriers may also be demodulated simultaneously. In another embodiment of the present invention, signals may be transmitted to the receiver and distribution unit 100 using single-carrier modulation techniques.

In an embodiment of the present invention, the receiver and distribution unit 100 receives and stores multimedia data transmitted over the FLO™ network. The FLO™ network multicasts a high volume of multimedia data to a large number of devices in a spectrally efficient manner, and is deployed by the MediaFLO™ media distribution system. Currently, the MediaFLO™ media distribution system utilizes the lower frequency band previously allocated to UHF TV channel 55 in the United States (716 MHz - 722 MHz). Multimedia data may comprise real-time and non-real-time content, and may be provided by national and local content providers. The multimedia data is reformatted into FLO™ packet streams, which are sent to FLO™ transmitters. The FLO™ packet streams are converted to FLO™ signals, which are modulated using hierarchical modulation techniques (e.g., OFDM), and the FLO™ signals are simultaneously transmitted by the FLO™ transmitters over a single frequency channel to the receiver and distribution unit 100. The FLO™ transmitters operate at an effective radiated power (ERP) as high as 50 kW. The utilization of a single frequency network allows for the coexistence of local and wide area coverage within a single RF channel. Multimedia content that is of common interest to subscribers in a wide area network is carried by the local area signals, eliminating the need for complex handoffs upon the receiver and distribution unit 100 moving between different coverage areas. The receiver and distribution unit 100 may utilize a 3G cellular network with the MediaFLO™ media distribution system to deliver content, provide interactivity to the user, and facilitate user authorization to the service.

The received multimedia data may be delivered in the form of real-time streaming or stored in a storage device 116 of the receiver and distribution unit 100 for later viewing. The storage device 116 can include, for example, flash memory, a memory card that fits into a PCMCIA slot, a hard drive, a digital video recorder, or any other available storage device. The multimedia data stored in the storage device 116 can be retrieved by a user at any time for playing, for example, on a display or through a stereo system of the vehicle. Selection of programming to be played can be made via a wired controller and a wireless remote controller. The wired controller and the wireless remote controller, via a wireless remote receiver 115, are connected to a function control unit 117 in the receiver and distribution unit 100. The function control unit 117 allows a user to control the functions of the receiver and distribution unit 100. Such functions are those typical of a television and entertainment system, and may include, but are not limited to, channel selection, volume control, playback control, and recording control. The wired controller and wireless remote controller may further control functions relating to web/Internet services. The wireless remote receiver 115 receives signals from the wireless remote controller via, for example, radio frequency (RF), infrared (IR), BLUETOOTH, or 802.11 techniques. Controls may further be included on the receiver and distribution unit 100.

The received data may require processing prior to being viewed or heard by a user. Accordingly, the receiver and distribution unit 100 is equipped with signal processing/conversion facilities 110 for performing signal processing and/or signal conversion. The signal processing/conversion facilities 110 include components, such as demodulators, demultiplexers and decoders to reformat the transmitted audio and video data for display and listening. Such reformatting may include decompression of compressed audio and video data. Demodulators in the signal processing/conversion facilities 110 support, but are not limited to, demodulating signals modulated using Binary Phase-Shift Keying (BPSK), Quadrature Phase-Shift Keying (QPSK), Quadrature Amplitude Modulation (QAM), and layered modulation techniques.

The signal processing/conversion facilities 110 may perform such processing/conversion prior to the signals being provided to the display device 130 or any other device (e.g., speakers). Alternatively, the display device 130 or stereo system can include such signal processing/conversion facilities 110.

The signal processing/conversion facilities 110 may include, but are not limited to, Digital Signal Processors (DSPs),Field-Programmable Gate Arrays (FPGAs), hard-wired digital logic, and facilities for performing encoding/ decoding, encrypting/decrypting, compressing/decompressing, analog-to-digital conversion (ADC), digital-to-analog conversion (DAC), and error correction. The signal processing/conversion facilities 110 may further perform Fast Fourier Transforms (FFT) and Inverse Fast Fourier Transforms (IFFT) on received data streams. For example, the signal processing/conversion facilities 110 may implement a FFT to separate multiple data streams carried on the sub-carriers of a received OFDM signal. Such error correction may include, but is not limited to, Cyclic Redundancy Checking (CRC), Error Correction Code or Error Checking and Correcting (ECC), checksum, and so forth.

In many cases, the facilities described above may be implemented by one or more codecs. In other cases, additional and/or other circuitry may be required.

It is to be appreciated that the signal processing/conversion facilities 110 described above with respect to the console may be located separate from or as part of the wireless receiver 114. It is to be further appreciated that one of ordinary skill in the related art will contemplate these and various other facilities for performing signal processing and/or signal conversion, while maintaining the spirit and scope of the invention.

The receiver and distribution unit 100 also includes a central processing unit (CPU) 112. The processor 112 may be used to control and/or interact with any of the elements associated with the unit 100. The elements shown in FIG. 1 may be connected by one or more buses 125.

The display 130 includes a screen for displaying video. The screen is preferably an LCD type display, but may be another type of display, such as, for example, an organic LED or electro-luminescent display. The display 130 may include speakers for outputting audio. Alternatively, speakers may be separately provided as part of the receiver and distribution unit 100, or an electrical connection can be made to speakers positioned remote from the unit 100. Similarly, the display 130 may be part of the unit 100 or positioned remote from the unit 100, as shown in FIG. 2.

The receiver and distribution unit 100 may be positioned in any number of locations in a vehicle. For example, a unit 100 may be positioned overhead in a vehicle and can be coupled to a flip-down display 130. The unit 100 may also be mounted to a seat, positioned in the dashboard, under a seat, in a trunk or rear portion, or in a center console, or in any other convenient location of the vehicle.

Referring to FIG. 2, a headrest 10 includes a display 130 having a screen for displaying video. The display 130 is connected to the data bus 125 to receive the multimedia signals from the unit 100. The data bus 125 is preferably capable of high bandwidth signal communication, and can be implemented in the form of an optical fiber or copper wire. The data bus 125 carries information such as, for example, video and left and right audio outputs.

A transmit circuit may be disposed at the distal end of the data bus 125, and a receive circuit disposed proximal to the display, to process the audio/video signals for proper transmission or reception of the signals and to facilitate play of the audio/video program at the display.

In an embodiment wherein optical fiber is used as the data bus 125, the transmit and receive circuits perform an optical communication protocol, including electrical to optical conversions, to effect signal communication. An example of an optical communication protocol is the Media Oriented Systems Transport (MOST) protocol.

An optical communication protocol, such as MOST, enables efficient transport of streaming multimedia information. Devices can communicate with each other using a high-speed connection over, for example, plastic optical fiber (POF). For example, audio and video programming can be sent around a network for simultaneous playback at several locations in a vehicle. Dynamic equalization and active noise cancellation on all audio signals flowing around the vehicle is possible because digital data is available to all devices on a network. The optical fiber medium, such as, for example, POF, provides low infrastructure costs while making data impervious to electromagnetic disturbances.

An optical protocol, such as the MOST protocol, defines software interfaces to enable applications running on different devices to communicate and exchange information, and defines a transport mechanism that sets up a link for streaming data between devices. The protocol also defines the hardware interface needed to communicate over optical fiber.

In an embodiment where copper wire is used as the data bus 125, the transmit and receive circuits perform the necessary multiplexing and data conversion known to one of ordinary skill in the art to effect communication of the programs.

As shown in FIG. 2, the displays 130 are connected to the data bus 125 by extension data bus lines 140, and are positioned remote from the unit 100, such as in the headrest 10. The remotely positioned display(s) may also be positioned in another part of the vehicle (*e*.*g*., overhead, in a center console, in the dashboard). In the embodiment shown in FIG. 2, the unit 100 may be positioned in any convenient location in the vehicle, such as overhead, under a seat, in a center console, in a dashboard, in a trunk, etc.

The receiver and distribution unit 100 may also include an additional media source 111 connected to the data bus 125 via a selection multiplexer 113 for feeding programming to the displays. For example, the additional media source 111 may be a DVD player, a CD-ROM player, a video game player, a videocassette player, a television tuner, a radio tuner, an MP3 player, a digital video recorder (DVR), and/or a device for playing media supplied from a portable storage device (*e.g.*, a portable hard drive, memory cards, flash memory sticks, key drives, thumb drives). The selection multiplexer 113 is further connected to the wireless receiver 114, allowing the user to choose between displaying media received via the wireless receiver 114 or media provided by the additional media source 111. Such a selection may be made by the user via the wired and wireless remote controller. The media selected by the user is multiplexed to the data bus 125 by the selection multiplexer 113.

Audio signals received by the receiver and distribution unit 100 may be sent to displays 130, to a speaker(s) and to a wireless transmitter(s) 118 via the data bus 125. Wireless transmitters 118, using, for example, radio frequency (RF), infrared (IR), BLUETOOTH, or 802.11 techniques, can transmit audio to, for example, receivers connected to a vehicle radio, wireless headphones, or a display having a speaker(s).

In addition to the data bus extension lines 140, wires for ground and power 141 (connected to, for example, a vehicle power supply) are connected from the displays 130 to the unit 100. Further, as an alternative to a single data bus carrying audio and video, multiple buses, such as a video and an audio bus, may be used.

The data bus extension line 140 (e.g., optical fiber or copper wire) is passed through a headrest support 15 routing the data bus extension line 140 from the headrest to elsewhere in the vehicle. Upon routing to, for example, the bottom of a seat, the line 140 can be connected to the receiver and distribution unit 100. Connection to the unit 100 may be supplied by any appropriate connectors capable of carrying high bandwidth, such as, for example, via a universal serial bus (USB) type connection 173.

Referring to FIG. 2, displays 130 in multiple headrests of a vehicle (*e.g*., in multiple rows of seating) can be linked via lines 140 connected to the receiver and distribution unit 100. Like the data bus 125, the extension lines 140 can carry multiple audio and video signals, and use, for example, optical or copper wire protocols capable of carrying high bandwidth.

Depending on selections made by each user on each display 130, the same or different programs can be simultaneously viewed on each of the displays 130.

In an embodiment of the present invention, a centralized power relay 174 located in the receiver and distribution unit 100 supplies power to the unit 100 and each of the displays 130 via respective power lines 141 connected to the power relay 174. The power relay 174 is connected to a main power supply 176, such as a vehicle power source.

Connections to the relay 174 and to a power supply of a vehicle and ground may be supplied via connectors/adaptors known to those of skill in the art. The power and ground wires can be run through the same headrest post 15 as or a different headrest post 15A from the lines 140.

The multimedia content available via the receiver and distribution unit 100 includes, for example, video programs, such as movies, television programs, newscasts, and webcasts, audio programs, and navigation information. In addition, a user can access other data or mediums currently available via wireless networks, including cellular networks and the FLO™ network, such as, for example, web/Internet services, including e-mail and browsing, telephone service, and text services, such as news, sports, stocks, weather and traffic information. Delivery of programming can be in the form of real-time streaming media or delayed via a background delivery service, wherein data is downloaded and stored for later viewing.

In an embodiment of the present invention, the receiver and distribution unit 100 can be permanently mounted and wired to displays in a vehicle. Alternatively, the receiver and distribution unit 100 can be a portable unit that can be moved between vehicles. The portable unit, for example, mounts and electrically connects to a docking station in a vehicle, the docking station being appropriately wired to displays and other components, such as speakers and a power source of the vehicle. A portable unit may be a stand-alone unit, including a display, which mounts to a docking station in a vehicle, for example, located overhead in a vehicle. Alternatively, the docking station may be located, for example, in a seat, in a dashboard or in a center console of a vehicle. A stand-alone unit can include a battery attachment so as to operate outside of the vehicle.

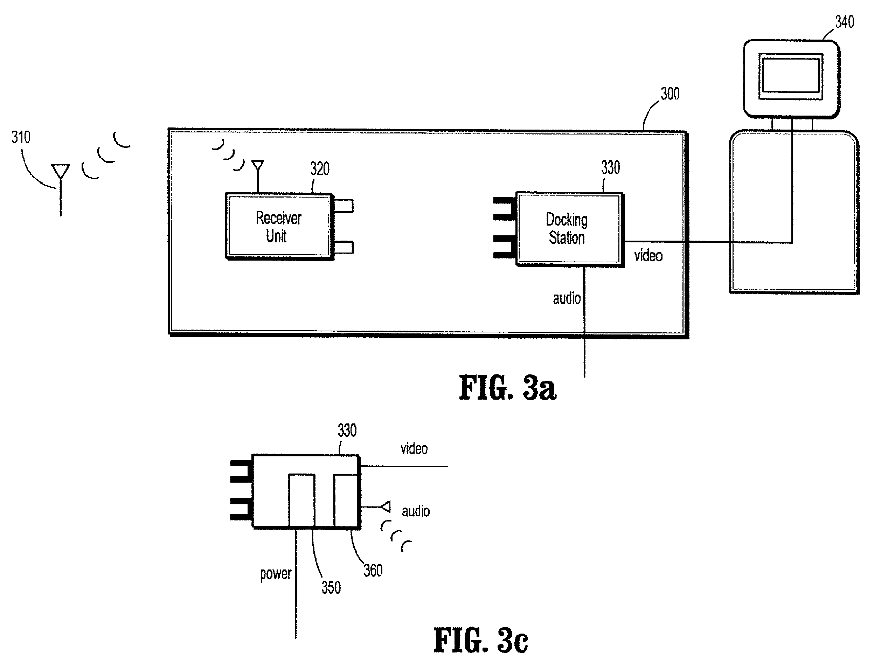

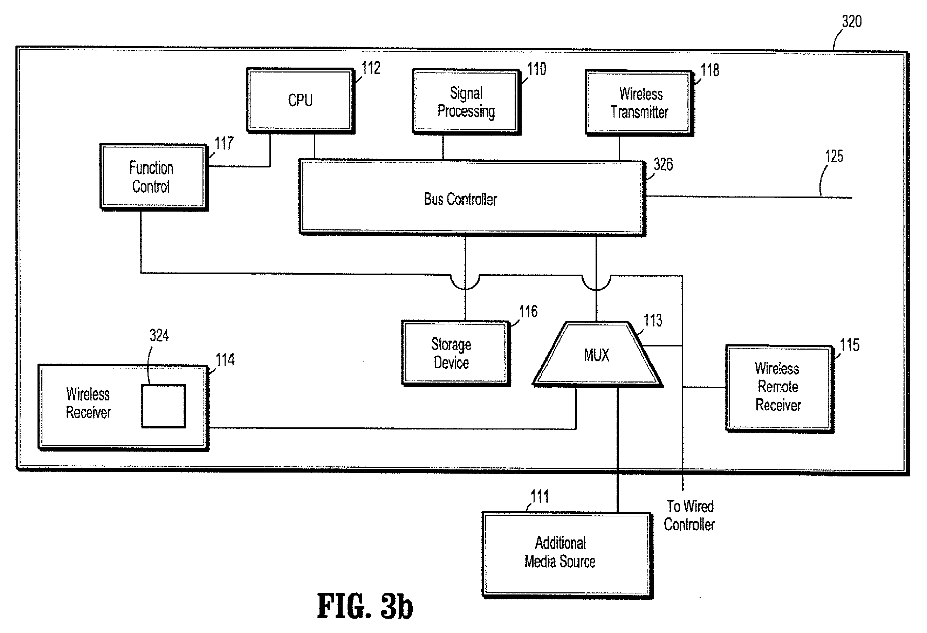

FIG. 3a, 3b, and 3c illustrate a receiver and distribution unit 300, according to an exemplary embodiment of the present invention. Referring to FIG. 3a, the unit 300 includes a receiver unit 320 and a docking station 330. The receiver unit 320 receives wireless media signals from an external source 310, such as, for example, FLO™ signals from the FLO™ network. FIG. 3b illustrates an embodiment of the receiver unit 320 which has the same general structure and performs the same receiving and decoding functions as the unit 100 illustrated in FIG. 1, and differs in that it does not include a display. The wireless receiver 114 of the receiver unit 320 additionally includes a buffer 324 for buffering streaming data. The buffer 324 temporarily stores raw unprocessed signals received via the external source 310. For example, the buffer 324 can be used to prevent loss of data which may occur if the signal processing of a current media signal has not completed before a new media signal is received by the wireless receiver 114. The wireless receiver 114 and the additional media source 111 are connected to the selection multiplexer 113, and the selection multiplexer 113, the storage device 116, the CPU 112, and the signal processing/conversion facilities 110 are attached to a bus controller 326, which manages the usage of the data bus 125 by the respective units, thereby preventing data collisions. The receiver unit 320 removably docks to the docking station 330. Although the receiving unit 320 and docking station 330 are illustrated as having respectively, 2 male and 2 female connectors, this is merely to illustrate docking. The receiving unit 320 may be connected to the docking station 330 in a variety of methods known to those skilled in the art. Once the receiving unit 320 processes the incoming media signals, it passes the processed media signals to the docking station 330 for distribution of video signals to one or more displays 340 in the vehicle and audio signals to one or more sound systems in the vehicle. Although FIG. 3a illustrates one display, the present invention is not limited thereto, as any number of displays can be supported. The docking station 330 may be wired directly to a sound system of the vehicle.

FIG. 3c illustrates an embodiment of the docking station which may include a centralized power relay 350 and/or a transmitter 360. When the docking station 330 includes the centralized power relay 350, it may provide power to the receiver unit 320, and the one or more displays 340. When the docking station includes a transmitter, it may wirelessly transmit the audio signals for reception by a wireless sound system in the vehicle, such as to wireless headphones. The transmitter may use various methods of transmission, such as, for example, radio frequency (RF), infrared (IR), BLUETOOTH, or 802.11.

It should be noted that the units attached to the data bus 125 in FIG. 1 and FIG. 3b are shown in this way for ease of illustration, and there may be intervening circuitry as envisioned by those skilled in the art.

Although exemplary embodiments of the present invention have been described hereinabove, it should be understood that the present invention is not limited to these embodiments, but may be modified by those skilled in the art without departing from the spirit and scope of the present invention, as defined by the appended claims.

## Claims

1. A receiver and distribution unit for a vehicle, comprising:
a wireless receiver receiving a signal comprising media content from a wireless network; and
signal processing/conversion facilities for decoding the signal into audio signals for output to a speaker and video signals for output to a display, wherein the wireless receiver receives an orthogonal frequency division multiplexing (OFDM) signal.

2. The receiver and distribution unit of claim 1, wherein media content corresponding to a single sub-carrier of the OFDM signal is demodulated.

3. The receiver and distribution unit of claim 1, wherein the signal processing/conversion facilities comprise one of a digital signal processor (DSP) or a field-programmable gate array (FPGA) for performing a Fast Fourier Transform (FFT) on the OFDM signal to separate data streams carried on multiple sub-carriers of the OFDM signal.

4. The receiver and distribution unit of claim 1, wherein the wireless receiver receives a forward link only (FLO) signal.

5. The receiver and distribution unit of claim 1, wherein the signal processing/conversion facilities perform one of binary phase-shift keying (BPSK) demodulation, quadrature phase-shift keying (QPSK) demodulation, or quadrature amplitude modulation (QAM) demodulation.

6. The receiver and distribution unit of claim 1, further comprising:
a data bus; and
a selection multiplexer connected to the wireless receiver and an additional media source to multiplex one of media content corresponding to the wireless receiver or the additional media source to the data bus.

7. The receiver and distribution unit of claim 1, further comprising a function control for controlling functions of the receiver and distribution unit.

8. The receiver and distribution unit of claim 3, wherein the function control is controllable by a wired controller and a wireless remote controller.

9. The receiver and distribution unit of claim 1, wherein the receiver and distribution unit is mounted on a surface within the vehicle and the display is mounted in one of a headrest of a seat in the vehicle, an overhead in the vehicle, a dashboard in the vehicle, or a center console in the vehicle.

10. The receiver and distribution unit of claim 1, further comprising a storage device capable of storing audio and video signals.

11. The receiver and distribution unit of claim 1, further comprising a buffer for buffering a streaming data.

12. The receiver and distribution unit of claim 1, further comprising a wireless transmitter for broadcasting the audio signals to a wireless sound system.

13. The receiver and distribution unit of claim 12, wherein the wireless transmitter transmits the audio signals using one of infrared (IR), radio frequency (RF), BLUETOOTH, or 802.11 standards.
